Europäisches Patentamt

European Patent Office

Office européen des brevets

(19)

(11) Veröffentlichungsnummer: **0 180 656**
**B1**

(12) # EUROPÄISCHE PATENTSCHRIFT

(45) Veröffentlichungstag der Patentschrift:
02.11.88

(21) Anmeldenummer: **84113359.8**

(22) Anmeldetag: **06.11.84**

(51) Int. Cl.⁴: **F 16 L 23/00,** F 16 L 49/00,
B 01 L 3/00

(54) **Rohrleitungskupplung für die Verbindung von Rohren aus spröden Werkstoffen.**

(43) Veröffentlichungstag der Anmeldung:
**14.05.86 Patentblatt 86/20**

(45) Bekanntmachung des Hinweises auf die Patenterteilung:
**02.11.88 Patentblatt 88/44**

(84) Benannte Vertragsstaaten:
**DE FR GB**

(56) Entgegenhaltungen:
**FR-A-1 179 405**
**FR-A-2 345 656**
**GB-A-1 362 281**
**US-A-3 524 662**
**US-A-3 977 709**

(73) Patentinhaber: **QVF Glastechnik GmbH,**
**Schossbergstrasse 11, D-6200 Wiesbaden-**
**Schierstein (DE)**

(72) Erfinder: **Stumpf, Wilhelm, Zugspitzstrasse 35,**
**D-6200 Wiesbaden- Dotzheim (DE)**

(74) Vertreter: **Haug, Dietmar, Patentanwälte Andrae,**
**Flach, Haug, Kneissl Steinstrasse 44, D-8000**
**München 80 (DE)**

EP 0 180 656 B1

### Beschreibung

Die Erfindung betrifft eine Rohrleitungskupplung für die Verbindung von Rohren aus spröden Werkstoffen, bei welcher jeder der sich gegenüberstehenden Endabschnitte der Rohre eine zum jeweiligen Rohrende hin sich erweiternde Außenfläche hat und im radialen Abstand von einem Flansch umgeben ist, der eine entsprechend der Form der sich erweiternden Außenfläche des jeweiligen Rohrendabschnitts zum jeweiligen Rohrende hin sich erweiternde Innenfläche hat, zwischen jedem Rohrendabschnitt und dem ihn umgebenden Flansch eine elastisch verformbare Einlage angeordnet ist, die mit ihren radialen Seitenflächen an der sich erweiternden Außenfläche des jeweiligen Rohrendabschnitts und der sich erweiternden Innenfläche des jeweiligen Flansches anliegt, und die beiden Flansche in Axialrichtung miteinander elastisch verspannt sind, wobei die elastisch verformbaren Einlagen in Axial- und Radialrichtung belastet werden.

Eine solche Rohrleitungskupplung ist aus der FR-A-2 345 656 bekannt. Bei dieser Rohrleitungskupplung schließt sich an die konisch geformte Außenfläche des jeweiligen Rohrendabschnitts ein umlaufender radialer nach außen ragender Vorsprung am jeweiligen Rohrende an. Ein nach innen ragender umlaufender radialer Vorsprung ist anschließend an die konisch geformte Innenfläche am engeren Ende des jeweiligen Flansches vorgesehen. Jede elastisch verformbare Einlage liegt mit ihren radialen Seitenflächen an der konisch geformten Außenfläche des jeweiligen Rohrendabschnitts und an der konisch geformten Innenfläche des jeweiligen Flansches und zusätzlich mit einem Teil ihrer axialen Stirnflächen an dem radialen nach innen ragenden Vorsprung des jeweiligen Flansches und an dem radialen nach außen ragenden Vorsprung des jeweiligen Rohrendabschnitts an. Durch Anlage der elastisch verformbaren Einlagen an den Vorsprüngen der Flansche und der Rohrendabschnitte werden die Einlagen und die Flansche daran gehindert, unter Einwirkung der an den Flanschen angreifenden Spannkräfte auf den konisch geformten Außenflächen der Rohrendabschnitte zu verrutschen, was zum Bruch führen kann. Es besteht aber der Nachteil, daß nach längerer Betriebszeit und vor allem unter dem Einfluß höherer Temperaturen und dem Anpreßdruck die elastischen Einlagen fest mit den Rohrendabschnitten einerseits und mit den Flanschen andererseits verkleben können. Bei einer eventuell notwendigen Demontage sind dann die Flansche nur noch unter großen Schwierigkeiten von den Rohrendabschnitten zu lösen. Gewaltanwendung führt dann oft zum Bruch der Rohre.

Ferner besteht der Nachteil, daß die Vorsprünge an den Rohrenden eine abrupte Wandstärkenänderung erfordern, die wegen der dadurch auftretenden Temperaturspannungen für spröde Werkstoffe schädlich ist. Die Vorsprünge an den Rohrenden bedingen aber auch, daß an ihnen Zugspannungsspitzen auftreten, die aber gerade bei spröden Werkstoffen zu vermeiden sind.

Eine andere Rohrleitungskupplung für die Verbindung von Glasoder Quarzrohren ist aus der GB-A-1 362 281 bekannt. Bei dieser Rohrleitungskupplung erweitern sich die miteinander zu verbindenden Rohrendabschnitte auf ihrer Außenseite konisch bis zu dem jeweiligen Rohrende hin. Die beiden Rohre sind mit einer Plastikhülle umgeben, auf der eine Metallhülle aufgebracht ist. An einem Rohrendabschnitt ist ein Gewinde in der Metallhülle vorgesehen. Ein entsprechendes Gewinde ist in die Innenfläche des einen Flansches geformt. Am anderen Rohrendabschnitt ist das Ende der Metallhülle gegenüber dem Ende der Plastikhülle axial zurückversetzt, so daß ein Teil der Plastikhülle freigelegt ist. Auf der Innenseite des entsprechenden Flansches ist im Bereich des freigelegten Teiles der Plastikhülle eine umlaufende dreieckige Nut vorgesehen, in welcher das Plastikmaterial des freigelegten Teiles hineingepreßt wird. Keiner der beiden Flansche erweitert sich jedoch auf der Innenseite zu dem jeweiligen Rohrende hin. Auch eine elastische Verspannung der beiden Flansche in Axialrichtung ist nicht vorgesehen. Ein Flansch ist zudem mit der Metallhülle durch eine Schweißnaht verbunden. Mit dieser Kupplung soll eine dauerhafte Verbindung zwischen den Rohren geschaffen werden, wobei die Ummantelung der Rohre ihrer Verstärkung dient.

Die Aufgabe der Erfindung besteht darin, eine Rohrleitungskupplung der eingangs genannten Art so auszubilden, daß sie auch nach längerer Betriebszeit, während der sie hohen Temperaturen ausgesetzt ist, leicht demontierbar ist, wobei gewährleistet ist, daß ein Verrutschen der elastischen Einlagen und/oder der Flansche aufgrund der elastischen Verspannung der Flansche vermieden wird.

Die Aufgabe der Erfindung wird dadurch gelöst, daß die sich erweiternde Innenfläche von jedem Flansch und/oder die sich erweiternde Außenfläche von jedem Rohrendabschnitt wenigstens im Bereich der jeweiligen elastisch verformbaren Einlage eine erhöhte Oberflächenrauhigkeit in Form von mindestens einer umlaufenden stufenförmigen Ausnehmung aufweist, in welche die elastisch verformbare Einlage hineingedrückt ist, und daß die oder jede stufenförmige Ausnehmung eine im wesentlichen senkrecht zur Achse des jeweiligen Rohrendabschnitts verlaufende Fläche und eine weitere Fläche mit einer zu dem jeweiligen Rohrende hin sich erweiternden Form hat.

Durch die erfindungsgemäße Erhöhung des Reibungskoeffizienten zwischen den Flanschen und/oder den Rohrendabschnitten und den Einlagen wird das permanente Nachrutschen der Flansche unter wechselnden Temperaturen ebensogut vermieden wie bei dem von der Kraftübertragung her gesehenen Idealfall einer Rohrleitungskupplung zur Verbindung von Rohren aus spröden Werkstoffen, bei dem die elastisch verformbare Einlage sowohl mit dem Rohrendabschnitt als auch mit dem Flansch verklebt ist. Die erfindungsgemäße Rohrleitungskupplung hat im Vergleich zu diesem Idealfall jedoch den Vorteil, daß sie leicht demontierbar ist.

Die Ausbildung der Oberflächenrauhigkeit durch eine oder mehrere umlaufende stufenförmige Ausnehmungen hat den Vorteil, daß auch nach einer Verhärtung der ursprünglich elastischen Einlage die Flansche, beispielsweise durch einen leichten Schlag, problemlos wieder gelöst werden können. Darüber hinaus wird durch die Stufen, ob fein oder grob abgestuft, ein weiteres Nachrutschen der Flansche absolut verhindert, nachdem sie einmal ihre Endposition erreicht haben.

Durch die erfindungsgemäße Ausbildung der stufenförmigen Ausnehmungen lassen sich die Flansche durch Zurückschieben leicht lösen.

Wenn die oder jede stufenförmige Ausnehmung sowohl an den Rohrendabschnitten als auch an den Flanschen vorgesehen ist, preßt sich die elastische Einlage beim Anziehen in die Ausnehmungen sowohl des Rohrendabschnittes als auch des Flansches. Nach Erreichen dieser Endposition kann sie in Anzugsrichtung nicht mehr weiter nachgeben. Bei der Demontage reicht dann auch nach Verhärtung der ursprünglich elastischen Einlage ein leichter Schlag, um den Flansch wieder zu lösen.

In Extremfällen kann jedoch trotzdem noch - vor allem unter Temperatureinfluß - ein Festkleben der Einlage erfolgen. Dieser Effekt kann jedoch vermieden werden, wenn nach einer weiteren Ausgestaltung der Erfindung die Einlagen aus einem massiven, nichtklebenden Material ausgeführt werden. Die Ausführung der Einlagen in einem massiven, nichtklebenden Material ist aber in der Regel teuer. Eine kostengünstigere Lösung sieht so aus, daß die Einlage auf einer oder beiden radialen Seitenflächen mit einem haftungsmindernden Überzug versehen wird, wobei diese Lösung häufig ausreichend ist, um den gewünschten Effekt zu erzielen.

Ein Ausführungsbeispiel der Erfindung ist in der Zeichnung dargestellt und wird im folgenden näher beschrieben.

Es zeigt:

Fig. 1 eine Schnittdarstellung einer Rohrleitungskupplung nach der Erfindung, wobei der Schnitt entlang der Rohrendenachsen gelegt ist, und

Fig. 2 einen Ausschnitt aus einem der Rohrenden an der Stelle A in vergrößerter Darstellung.

Bei einer erfindungsgemäßen Rohrleitungskupplung für die Verbindung von Rohren aus spröden Werkstoffen, wie z. B. Glas, Porzellan, Steinzeug, Quarz oder Keramik, sind die sich gegenüberstehenden und axial fluchtenden Rohrendabschnitte 1 auf der Außenseite nach dem jeweiligen Rohrende zu konisch erweitert. Jeder Rohrendabschnitt 1 wird von einem Flansch 2 in Form eines Schellenringes koaxial umgeben. Die Schellenringe 2 sind auf der Innenseite entsprechend der Form der Außenseite der Rohrendabschnitte konisch ausgeführt, wobei sich die Innenfläche der Schellenringe ebenfalls nach dem jeweiligen Rohrende zu erweitert. Die Schellenringe 2 umgeben die Rohrendabschnitte 1 im radialen Abstand, so daß zwischen jedem Schellenring 2 und dem zugehörigen Rohrendabschnitt 1 ein kegelstumpfförmiger Ringraum entsteht, in dem eine elastisch begrenzt verformbare Einlage 3 in Form eines kegelförmigen Ringes geordnet ist. Die beiden Schellenringe 2 werden durch Spannschrauben 4 zusammengehalten, wobei zwischen den Muttern 5 und der ihnen zugekehrten Stirnfläche des jeweiligen Schellenringes 2 Federpakete 6 angeordnet sind. Die Einlagen 3 werden durch die miteinander elastisch verspannten Schellenringe 2 gegen die Außenseite der Rohrendabschnitte 1 gedrückt, wobei sie unter elastischer Verformung die Schellenringe 2 auf den Rohrendabschnitten 1 halten. Der kleinste Innendurchmesser der Schellenringe 2 ist minimal größer als der größte Außendurchmesser der Rohrendabschnitte. Die Schellenringe 2 sind meistens aus einem metallischen Werkstoff ausgeführt, sie können aber auch aus Kunststoff bestehen. Die Schellenringe 2 sind im dargestellten Beispiel einteilig ausgeführt. Sie können aber auch in Ausnahmefällen, vor allem, wenn der Konus sehr steil ausgeführt ist, zweiteilig ausgeführt sein, da sonst die Einlage zu dick und damit zu nachgiebig würde.

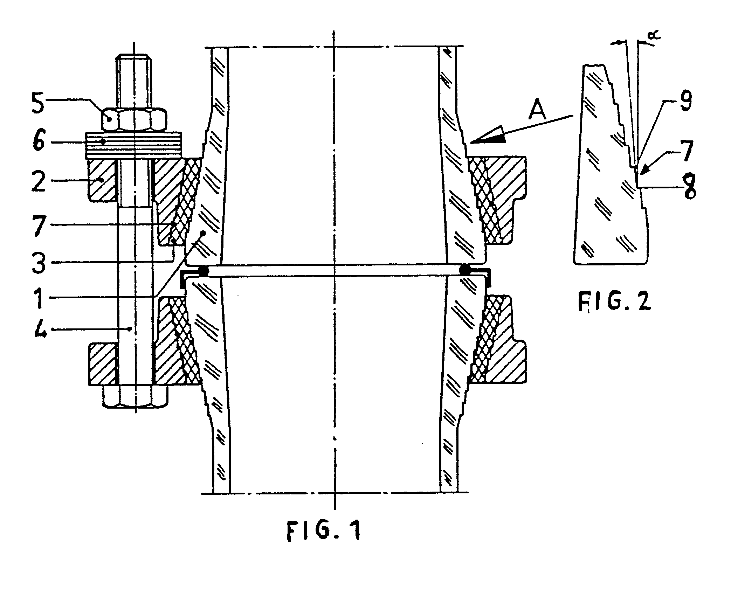

Ein wesentliches Merkmal der Erfindung besteht nun darin, daß sowohl auf der Außenseite der Rohrendabschnitte 1 als auch auf der Innenseite der Schellenringe 2 rundumlaufende stufenförmige Ausnehmungen 7 vorgesehen sind, in welche die Einlagen 3 hineingedrückt sind. Diese stufenförmigen Ausnehmungen 7 haben, wie aus Fig. 2 ersichtlich ist, eine Fläche 8, die im wesentlichen senkrecht zu den Achsen der Rohrenden 1 verläuft und eine weitere Fläche 9, die sich unter einem Winkel $\alpha$ von ungefähr 4° nach außen, d. h. zum Rohrende hin, konisch erweitert. Durch die stufenförmigen Ausnehmungen 7 wird auf der Außenseite der Rohrenden 1 und der Innenseite der Schellenringe 2 eine Oberflächenrauhigkeit geschaffen, die verhindert, daß die Einlagen 3 und/oder die Schellenringe 2 in Anzugsrichtung verrutschen können, nachdem sie ihre Endposition erreicht haben. Gleichzeitig gestattet die kegelige Ausführung der weiteren Flächen 9 der stufenförmigen Ausnehmungen 7 ein leichtes Lösen der Schellenringe 2 und der Einlagen 3 durch Zurückschieben.

Bei der Montage der Rohrleitungskupplung wird so vorgegangen, daß zunächst die Schellenringe 2 über die jeweiligen Rohrendabschnitte 1 geschoben und dann die Einlagen 3 in die Schellenringe 2 eingeschoben werden. Die Schellenringe 2 werden mit den Einlagen 3 dann wieder zurück auf die Rohrendabschnitte 1 gedrückt, wo sich ein fester Sitz ergibt. Dann werden die Schellenringe miteinander verspannt, wobei sich die elastischen Einlagen in die Ausnehmungen 7 sowohl der Rohrendabschnitte 1 als auch der Schellenringe 2 hineinpressen. Nach Erreichen dieser Endposition können die Einlagen 3 nicht mehr weiter in Anzugsrichtung nachgeben.

Die Einlagen 3 können aus einem fluorhaltigen Polymer, wie z. B. PTFE (Polytetrafluorethylen) und verwandte Fluorcarbone, hergestellt sein oder auch nur einen haftungsmindernden Überzug aus einem solchen Kunststoff haben, um das Zurückschieben der Schellenringe 2 und der Einlagen 3 bei der Demontage der Kupplung zu erleichtern.

Obwohl bei dem beschriebenen und in der Zeichnung dargestellten Ausführungsbeispiel mehrere rundumlaufende, stufenförmige Ausnehmungen vorgesehen sind, kann die der Erfindung zugrunde liegende Aufgabe auch dann zufriedenstellend gelöst werden und können die Vorteile der Erfindung erzielt werden, wenn nur eine solche Ausnehmung vorgesehen ist.

**Patentansprüche**

1. Rohrleitungskupplung für die Verbindung von Rohren aus spröden Werkstoffen, bei welcher jeder der sich gegenüberstehenden Endabschnitte (1) der Rohre eine zum jeweiligen Rohrende hin sich erweiternde Außenfläche hat und im radialen Abstand von einem Flansch (2) umgeben ist, der eine entsprechend der Form der sich erweiternden Außenfläche des jeweiligen Rohrendabschnitts (1) zum jeweiligen Rohrende hin sich erweiternde Innenfläche hat, zwischen jedem Rohrendabschnitt (1) und dem ihn umgebenden Flansch (2) eine elastisch verformbare Einlage (3) angeordnet ist, die mit ihren radialen Seitenflächen an der sich erweiternden Außenfläche des jeweiligen Rohrendabschnitts (1) und der sich erweiternden Innenfläche des jeweiligen Flansches (2) anliegt, und die beiden Flansche (2) in Axialrichtung miteinander elastisch verspannt sind, wobei die elastisch verformbaren Einlagen (3) in Axial- und Radialrichtung belastet werden, dadurch gekennzeichnet, daß die sich erweiternde Innenfläche von jedem Flansch (2) und/oder die sich erweiternde Außenfläche von jedem Rohrendabschnitt (1) wenigstens im Bereich der jeweiligen elastisch verformbaren Einlage (3) eine erhöhte Oberflächenrauhigkeit in Form von mindestens einer umlaufenden stufenförmigen Ausnehmung (7) aufweist, in welche die elastisch verformbare Einlage (3) hineingedrückt ist, und daß die oder jede stufenförmige Ausnehmung (7) eine im wesentlichen senkrecht zur Achse des jeweiligen Rohrendabschnitts (1) verlaufende Fläche (8) und eine weitere Fläche (9) mit einer zu dem jeweiligen Rohrende hin sich erweiternden Form hat.

2. Rohrleitungskupplung nach Anspruch 1, dadurch gekennzeichnet, daß die weitere Fläche (9) der Ausnehmung (7) kegelförmig ausgebildet ist und einen im Bereich von 1 bis 10° liegenden Winkel α mit der Achse des jeweiligen Rohrendabschnitts (1) bildet.

3. Rohrleitungskupplung nach Anspruch 2, dadurch gekennzeichnet, daß der Winkel α ungefähr 4° beträgt.

4. Rohrleitungskupplung nach einem der vorhergehenden Ansprüche, dadurch gekennzeichnet, daß nur die sich erweiternden Außenflächen der Rohrendabschnitte (1) die erhöhte Oberflächenrauhigkeit aufweisen.

5. Rohrleitungskupplung nach einem der vorhergehenden Ansprüche, dadurch gekennzeichnet, daß die Einlagen (3) aus einem massiven, nichtklebenden Material ausgeführt sind.

6. Rohrleitungskupplung nach einem dem vorhergehenden Ansprüche, dadurch gekennzeichnet, daß die Einlagen (3) auf einer oder beiden radialen Seitenflächen mit einem haftungsmindernden Überzug versehen sind.

7. Rohrleitungskupplung nach Anspruch 5 oder 6, dadurch gekennzeichnet, daß die Einlagen (3) oder der haftungsmindernde Überzug aus einem fluorhaltigen Polymer bestehen bzw. besteht.

**Claims**

1. A pipe coupling for connecting pipes made of brittle materials, each of the facing end parts (1) of the pipes having an outside surface widening towards the respective pipe end and being surrounded at a radial distance by a flange (2), the same having an inside surface which widens in accordance with the shape of the widening outside surface of the associated pipe end part (1) towards the respective pipe end, a resiliently deformable insert (3) is disposed between each pipe end part (1) and the flange (2) therearound and engages by way of its radial side surfaces with the widening outside surface of the associated pipe end part (1) and the widening inside surface of the associated flange (2), and the two flanges are braced together resiliently in the axial direction, the resiliently deformable inserts (3) being loaded axially and radially, characterised in that the widening inside surface of each flange (2) and/or the widening outside surface of each pipe end part (1) has at least in the region of the associated resiliently deformable insert (3) increased surface roughness in the form of at least one peripheral step-like recess (7) into which the resiliently deformable insert (3) is pressed, and the or each step-like recess (7) has a surface (8) extending substantially perpendicularly to the axis of the associated pipe end part (1) and another surface (9) of a shape which widens towards the associated pipe end.

2. A pipe coupling according to claim 1, characterised in that the other surface (9) of the recess (7) is conical and forms with the axis of the associated pipe end part (1) an angle $\alpha$ in the region of from 1 to 10°.

3. A pipe coupling according to claim 2, characterised in that the angle $\alpha$ is approximately 4°.

4. A pipe coupling according to any of the previous claims, characterised in that only the widening outside surfaces of the pipe end parts (1) have the increased surface roughness.

5. A pipe coupling according to any of the previous claims, characterised in that the inserts (3) are made of a solid nonadhesive material.

6. A pipe coupling according to any of the previous claims, characterised in that the inserts (3) have an adhesion-reducing covering on one or both radial side surfaces.

7. A pipe coupling according to claim 5 or 6, characterised in that the inserts (3) or the adhesion-reducing covering are or is made of a fluorine-containing polymer.


**Revendications**

1. Accouplement de conduite tubulaire pour la liaison de tubes en matière fragile, dans lequel chacune des sections d'extrémité (1) des tubes se faisant face possède une surface externe allant en s'élargissant vers les extrémités de tube et est entourée à distance radiale d'une bride (2) qui possède une surface interne qui va en s'élargissant vers les extrémités de tube, suivant la forme des surfaces externes allant en s'élargissant, des sections d'extrémité (1) des tubes, une pièce intermédiaire (3), déformable élastiquement, est disposée entre chaque section d'extrémité de tube (1) et la bride (2) qui l'entoure, en s'appliquant, par ses surfaces latérales radiales, contre la surface externe allant en s'élargissant de chaque section d'extrémité de tube (1) et contre la surface interne allant en s'élargissant de chaque bride (2), et les deux brides (2) sont serrées élastiquement l'une contre l'autre en direction axiale, la pièce intermédiaire (3), déformable élastiquement, étant contrainte en direction axiale et en direction radiale, caractérisé par le fait que les surfaces internes, allant en s'élargissant, de chaque bride (2) et/ou les surfaces externes, allant en s'élargissant, de chaque section d'extrémité de tube (1), présente, au moins dans la zone de chaque pièce intermédiaire (3), déformable élastiquement, une rugosité de surface élevée, sous forme d'au moins un évidement (7) continu étagé, dans lequel est pressée la pièce intermédiaire (3) déformable élastiquement et l'évidement, ou chaque évidement (7), étagé possède une surface (8) s'étendant sensiblement perpendiculairement à l'axe de chaque section d'extrémité de tube (1) et une autre surface (9) d'une forme allant en s'élargissant vers chaque extrémité de tube.

2. Accouplement de conduite tubulaire selon la revendication 1, caractérisé par le fait que l'autre surface (9) de l'évidement (7) est de forme conique et fait un angle $\alpha$ voisin de 1 à 10° avec l'axe de chaque section d'extrémité de tube (1).

3. Accouplement de conduite tubulaire selon la revendication 2, caractérisé par le fait que l'angle $\alpha$ est d'environ 4°.

4. Accouplement de conduite tubulaire selon l'une des revendications précédentes, caractérisé par le fait que seules les surfaces externes, allant en s'élargissant, des sections d'extrémité de tube (1) présentent la rugosité de surface élevée.

5. Accouplement de conduite tubulaire selon l'une des revendications précédentes, caractérisé par le fait que les pièces intermédiaires (3) sont faites en une matière massive, non collante.

6. Accouplement de conduite tubulaire selon l'une des revendications précédentes, caractérisé par le fait que les pièces intermédiaires (3) sont munies, sur une ou les deux surfaces latérales radiales, d'un revêtement réduisant l'adhérence.

7. Accouplement de conduite tubulaire selon la revendication 5 ou 6, caractérisé par le fait que les pièces intermédiaires (3) ou le revêtement réduisant l'adhérence sont faites, ou est fait, en un polymère fluoré.

FIG. 1

FIG. 2